**Europäisches Patentamt**

**European Patent Office**

**Office européen des brevets**

(11) Veröffentlichungsnummer: **0 043 509**
**A1**

(12) ## EUROPÄISCHE PATENTANMELDUNG

(21) Anmeldenummer: **81104916.2**

(22) Anmeldetag: **25.06.81**

(51) Int. Cl.³: **G 03 H 1/00, G 06 K 19/08**

(30) Priorität: **03.07.80 DE 3025131**

(43) Veröffentlichungstag der Anmeldung: **13.01.82**
**Patentblatt 82/2**

(84) Benannte Vertragsstaaten: **DE FR GB**

(71) Anmelder: **HOECHST AKTIENGESELLSCHAFT,**
**Postfach 80 03 20, D-6230 Frankfurt/Main 80 (DE)**

(72) Erfinder: **Schädlich, Günther, Erbsenacker 13,**
**D-6200 Wiesbaden-Naurod (DE)**
Erfinder: **Moraw, Roland, Dr., Buchenweg 4,**
**D-6200 Wiesbaden-Naurod (DE)**

(54) **Verfahren zum Herstellen eines mit mono- oder polychromatischem Licht rekonstruierbaren Hologramms.**

(57) Die Erfindung betrifft ein Verfahren zum Herstellen eines mit mono- oder polychromatischem Licht rekonstruierbaren Hologramms eines Objekts (6). Hierzu sendet eine Lichtquelle (2), beispielsweise ein Laser, einen Lichtstrahl (1) aus, der durch einen Strahlteiler (3) in zwei Teilstrahlen (4, 5), den Objekt- und den Referenzstrahl, aufgespaltet wird. Der Objektstrahl (4) verläßt ungebeugt den Strahlteiler, durchsetzt eine Streuscheibe (15), durchstrahlt ein Strichmuster (13) des Objektes (6) und trifft auf ein Aufzeichnungsmaterial (8) auf. Der vom Strahlteiler (3) umgelenkte Referenzstrahl (5) trifft auf einen Umlenkspiegel (14) auf und wird von diesem auf das Aufzeichnungsmaterial (8) gelenkt, wo er mit dem Objektstrahl (4) interferiert. Der Objekt- und der Referenzstrahl spannen eine Ebene auf, die parallel zu den Strichen des Strichmusters (13) verläuft.

HOECHST  AKTIENGESELLSCHAFT
KALLE  Niederlassung der Hoechst AG

Hoe 80/K 039          - 1 -          23. Juni 1981
                                     WLK-DI.Z.-is


Verfahren zum Herstellen eines mit mono- oder polychromatischem Licht rekonstruierbaren Hologramms


Die Erfindung betrifft ein Verfahren zum Herstellen eines
mit mono- oder polychromatischem Licht rekonstruierbaren
Hologramms eines Objekts, bei dem ein Aufzeichnungsmaterial für das Hologramm mit zwei kohärenten, interferierenden Lichtstrahlen einer Lichtquelle belichtet wird,
von denen der Objektstrahl durch das Objekt moduliert
wird und von der gleichen Seite wie der Referenzstrahl
auf das Aufzeichnungsmaterial auftrifft.

In der Holografie werden die von einem Objekt ausgehenden
Lichtwellen direkt in dem Aufzeichnungsmaterial gespeichert. Die Form der Speicherung geschieht durch gleichzeitiges Belichten des Aufzeichnungsmaterials durch eine
Referenzwelle und durch die Objektwelle. Dabei sind die
beiden Lichtwellen, die gleichzeitig das Aufzeichnungsmaterial treffen, genügend zeitlich kohärent, so daß sie
durch Interferenz örtlich verschiedene  Intensitätsverteilungen in dem Aufzeichnungsmaterial hervorrufen, deren
räumliche Verteilung in verschlüsselter Form die Objektwelle enthält. Die Rekonstruktion der Objektwelle geschieht im allgemeinen mit  . einfarbigem Licht einer
punktförmigen Lichtquelle. Dabei tritt der Nachteil bei
der Rekonstruktion mit monochromatischem Licht eines
Lasers bzw. einer Quecksilberlampe in der Form störend
auf, daß die Anlagen zur Rekonstruktion teuer und nicht
einfach in der Bedienung sind. Es ist daher wünschenswert,

HOECHST AKTIENGESELLSCHAFT
KALLE Niederlassung der Hoechst AG

- 2 -

daß die Bilder nicht nur mit monochromatischem sondern auch mit polychromatischem, vor allem weißem Licht rekonstruiert werden können. Dabei gilt es, die Schwierigkeit zu überwinden, daß die Rekonstruktion eines üblichen Hologramms mit weißem Licht im allgemeinen nicht mehr einen scharf rekonstruierten Gegenstand erkennen läßt, sondern nur ein verwischtes farbiges Lichtband. Jeder rekonstruierte Objektpunkt wird nämlich durch die Gitterwirkung des Hologramms zu einem linearen Spektrum auseinandergezogen, so daß auf diese Weise ein scharfes monochromatisches Bild nicht entstehen kann. In der sogenannten Weißlichtholografie wird zum Überwinden dieser Schwierigkeit das Hologramm mit einem ebenfalls linearen Spektrum umgekehrter Farbenfolge beleuchtet, so daß der Dispersionseffekt des Hologramms wenigstens teilweise aufgehoben werden kann. Das auf diese Art und Weise entstehende weiße Bild ist jedoch im allgemeinen nur von mäßiger Qualität und führt noch nicht zu dem gewünschten Ziel einer reinen Weißlichtrekonstruktion.

Zur Verbesserung der Wiedergabequalität des rekonstruierten Hologramms ist es in der Weißlichtholografie bekannt, wie dies in dem Sonderdruck aus G-I-T "Fachzeitschrift für das Laboratorium", Heft März 1974, Seiten 194-198 beschrieben ist, von dem Lippmann-Bragg-Effekt Gebrauch zu machen. Nach diesem Effekt wird in einer Filmemulsion oder einem sonstigen Aufzeichnungsmaterial eine stehende Lichtwelle erzeugt, die durch Gegeneinanderlaufen zweier Wellenanteile entsteht. Dadurch wird die Filmemulsion in Form von Schichten, d.h. mit zunehmender Tiefe, geschwärzt, so daß Bereiche geringer mit solchen hoher Absorption wechseln. Wird eine solche Lippmann-Schicht mit weißem Licht beleuchtet, so werden an den periodisch angeordneten Schichten Teilbündel so reflektiert, daß sie miteinander interferieren können. Dieser Effekt ist aus der Beugung von Röntgenstrahlen an Kristallen hinreichend bekannt und heißt dort Bragg-Effekt. Mehrere Teilbündel, die mit geeigneter konstanter Phasendifferenz von einer Lippmann-Schicht zurückgeworfen werden, löschen sich bis auf nur eine Schwerpunktwellenlänge aus, die somit verstärkt wird. Es wird also bei der Beleuchtung einer Lippmann-Schicht mit weißem Licht monochromatisches Licht remittiert. Der Lippmann-Bragg-Effekt ist Grundlage der echten Weißlichtholografie, wobei im Gegensatz zur normalen Holografie die Hologramme so aufgenommen werden, daß das Objektlicht von der einen, das Referenzlicht von der anderen Seite auf das Aufzeichnungsmaterial fällt.

Beide Lichtstrahlen entstammen dabei wieder dem gleichen Laser. In der Filmemulsion des Hologramms entstehen neben der Interferenz der beiden Lichtwellen, wie sie auch bei der gewöhnlichen Holografie auftritt, Schichtungen, d.h. periodisch mit zunehmender Schichttiefe veränderliche Schwärzungen. Bei einer Aufnahme solcher Hologramme muß die Aufzeichnungsschicht äußerst ruhig gehalten werden, da ansonsten die Schichtung sofort verwischt wird. Dabei ist von Nachteil, daß die Emulsion während der Entwicklung, des Fixierens oder Bleichens der Filmemulsion schrumpft, d.h. die Filmschichtdicke also abnimmt, so daß die Schichtungsperiode etwas verlängert wird und dadurch die rekonstruierte Wellenlänge gegenüber der Wellenlänge bei der Aufnahme des Hologramms geringfügige Unterschiede aufweist. Somit wird bei dieser Technik bei richtiger Dimensionierung der Schichtdicken bei der Lichteinstrahlung nur Licht einer Spektralfarbe reflektiert und zur Rekonstruktion des aufgezeichneten Hologramms benutzt. Die andersfarbigen Lichtwellenanteile löschen sich durch Interferenz aus. Diese Art der Hologrammaufzeichnung ist sehr schwer zu handhaben, unter anderem wegen der zuvor erwähnten Schrumpfung oder dem Quellen der Emulsionsschicht, wodurch die Schichtabstände in unerwünschter Weise verändert werden. Die Rekonstruktion eines derartigen Hologramms erfolgt im Reflexionslicht, wobei das Aufzeichnungsmaterial schwarz hinterlegt wird.

Die zuvor beschriebene Weißlichtholografie wird bei der Erstellung von Hologrammen angewandt, die in der DE-OS 28 40 556 beschrieben sind und dazu dienen Berechtigungsnachweise und Identitätsträger so abzusichern, daß eine Fälschung oder ein Mißbrauch nahezu unmöglich gemacht wird.

Bei der Herstellung dieser Hologramme beleuchtet ein Laser mit einem Parallelstrahl einen Strahlteiler, aus dem ein Objektstrahl und ein Referenzstrahl austreten. Der Objektstrahl trifft auf eine Mattscheibe, an deren Rückseite eine Blende angeordnet ist, die den Objektstrahl auf ein transparentes Objekt streut. Das Objekt steht möglichst in der Aperturblende einer Optik oder

HOECHST AKTIENGESELLSCHAFT
KALLE Niederlassung der Hoechst AG

- 5 -

in ihrer Nähe, d.h. zwischen den beiden Brennpunkten der Optik. Die Blende ist im objektseitigen Brennpunkt der Optik angeordnet. Der Referenzstrahl trifft auf einen Umlenkspiegel und wird durch eine weitere Optik mit dem Objektstrahl in der Hologrammebene zur Interferenz gebracht. Das auf diese Weise hergestellte Lippmann-Bragg-Hologramm rekonstruiert bei Beleuchtung mit inkohärentem polychromatischem Licht die aufgenommenen Bilder in einer bestimmten Farbe.

Ein Prüf- oder Lesegerät für dieses Hologramm weist eine inkohärente und polychromatische Lichtquelle auf, von der mittels einer Optik der Referenzstrahl erzeugt wird, der auf das Hologramm auftrifft und die Rekonstruktion des aufgenommenen Objekts durchführt. In der Ebene, in welcher bei der Aufnahme des Hologramms die Aperturblende der Abbildungsoptik stand, ist bei diesem Gerät ein optischer Sensor in Art einer Aufnahmeröhre angeordnet, mit welcher die rekonstruierten Punkte über einen Rechner ausgewertet werden können.

Erfolgt die Auswertung ohne Bildaufnahmeröhre, dann befindet sich an der Stelle dieser Röhre ein Aufbau, der dem bei der Aufnahme des Hologramms ähnlich ist. Hierzu ist ein Lochraster vorgesehen, das an der gleichen Stelle wie bei der Aufnahme angebracht ist und Loch für Loch separat geöffnet oder geschlossen werden kann. Durch eine Abbildungsoptik können die rekonstruierten Punkte durch eine weitere Optik, die der in der Aufnahmeanordnung verwendeten Optik entspricht, auf einen optischen Sensor abgebildet werden.

HOECHST AKTIENGESELLSCHAFT
KALLE Niederlassung der Hoechst AG

- 6 -

Bei den bekannten Weißlichthologrammen werden Filmemulsionen als Aufzeichnungsmaterial verwendet und der apparative Aufwand sowohl für die Aufnahme der Hologramme als auch für deren Rekonstruktion ist verhältnismäßig groß.

Werden derartige Lippmann-Bragg-Hologramme als Sicherungsmerkmale für Identitätskarten verwendet, so genügt es im allgemeinen, als Information in den Hologrammen unterscheidbare Muster zu speichern, ohne daß es erforderlich wäre, Bilder oder alphanumerische Zeichen holografisch abzubilden.

Aufgabe der Erfindung ist es, ein Verfahren zur Herstellung von Weißlichthologrammen anzugeben, das mit sehr geringem apparativem Aufwand sowohl bei der Aufnahme als auch bei der Rekonstruktion der Hologramme arbeitet, die Verwendung beliebiger holografischer Aufzeichnungsmaterialien ermöglicht und das gut voneinander unterscheidbare Strukturen als Sicherungselemente gegen Fälschungen ergibt.

Diese Aufgabe wird erfindungsgemäß durch ein Verfahren nach den Maßnahmen des Anspruchs 1 gelöst.

Die weitere Ausgestaltung des Verfahrens ergibt sich aus den Maßnahmen der Patentansprüche 2 bis 6.

Die auf diese Weise hergestellten Hologramme werden in Identitätsträgern als Sicherungsmerkmale verwendet.

0043509

HOECHST AKTIENGESELLSCHAFT
KALLE Niederlassung der Hoechst AG

- 7 -

Die Hologramme nach der Erfindung sind zwar nur auf die
Aufzeichnung von Strichmustern beschränkt, jedoch werden
mit ihnen die Vorteile erzielt, daß sie auf einem beliebigen
holografischen Aufzeichnungsmaterial, wie beispielsweise
einem fotoleitenden, thermoplastischen Film, eine Fotolackschicht oder einem fotografischen Film auf Silberhalogenid – Basis erzeugt werden, indem ein Hologramm des
aus einem Strichmuster bestehenden Objektes in konventioneller Weise gebildet wird. Dabei interferiert der
Objektstrahl, der durch das Objekt moduliert wird, unter
einem vorgegebenen Winkel mit dem Referenzstrahl im
Bereich des Aufzeichnungsmaterials. Bei der Rekonstruktion des aufgezeichneten Hologramms mit polychromatischem
Licht wird unter dem Aufzeichnungswinkel ein direkt wahrnehmbares Bild des Strichmusters erhalten, bei dem sich
die hellen Linien aus einer Farbfolge entsprechend dem
eingestrahlten polychromatischen Licht zusammensetzen.
Die Weißlichthologramme nach der Erfindung sind wesentlich einfacher und leichter herzustellen als Weißlichthologramme nach dem Stand der Technik, da der apparative
Aufwand bei Strichmustern sehr klein gehalten werden
kann, wenn die Striche des Strichmusters parallel zu der
Ebene orientiert sind, die von dem Objekt- und dem Referenzstrahl aufgespannt wird.

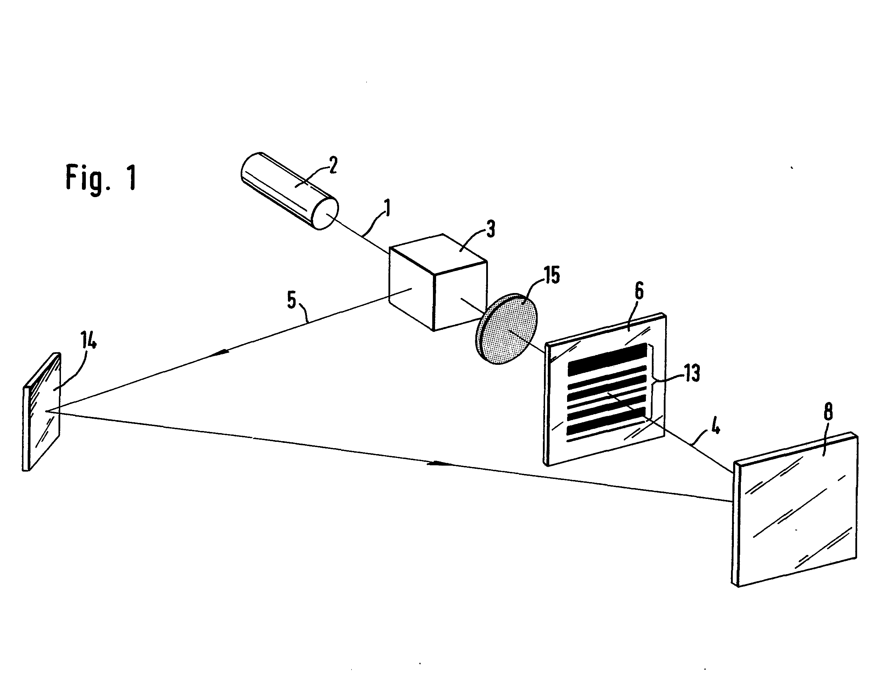

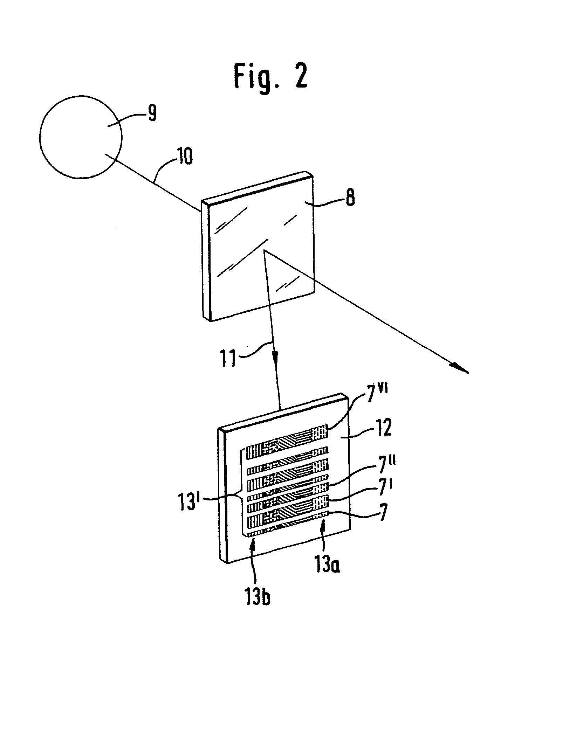

Die Erfindung wird im folgenden anhand des Verfahrensablaufs bei der Aufzeichnung und bei der Rekonstruktion
des Hologramms, wie sie in den Figuren 1 und 2 dargestellt
sind, näher erläutert.

HOECHST AKTIENGESELLSCHAFT
KALLE Niederlassung der Hoechst AG

- 8 -

Es zeigen:

Fig. 1 in schematischer Weise den Aufbau für die Aufzeichnung eines Hologramms nach der Erfindung,
und
Fig. 2 schematisch die Anordnung für die Wiedergabe
des Hologramms.

Bei der Anordnung nach Fig. 1 sendet eine monochromatische Lichtquelle 2, beispielsweise ein Laser, einen
Lichtstrahl 1 auf einen Strahlteiler 3, der den Lichtstrahl in zwei Teilstrahlen aufspaltet, nämlich den Objektstrahl 4 und den Referenzstrahl 5. Der Objektstrahl
4 verläßt ungebeugt den Strahlteiler und bestrahlt meist
eine Streuscheibe 15, die als Diffusor ausgebildet ist
und eine diffuse Ausleuchtung eines Objektes 6 bewirkt,
das ein Strichmuster 13 aufweist.

Der vom Strahlteiler 3 abgelenkte Referenzstrahl 5
trifft auf einen Umlenkspiegel 14 auf, der den Referenzstrahl auf ein Aufzeichnungsmaterial 8 lenkt, auf welchem der Referenzstrahl 5 mit dem Objektstrahl 4 interferiert. Der Referenzstrahl 5 und der Objektstrahl 4
spannen eine Ebene auf, parallel zu der die Striche des
Strichmusters 13 des Objektes 6 verlaufen.

Auch andere geometrische Anordnungen von Strahlteilern
und Spiegeln, die den Strahl 1 in Teilstrahlen 4 und 5
aufspalten, sind geeignet. Das Objekt 6 kann gegebenenfalls auch reflektierend ausgeleuchtet werden.

- 9 -

Bei einem Ausführungsbeispiel wurde als Aufzeichnungsmaterial 8 ein fotoleitender thermoplastischer Film der Anmelderin in einer Anordnung gemäß der Fig. 1 fotografisch bebildert. Als monochromatische Lichtquelle wurde ein Helium-Neon-Laser mit einer Leistung von 5 mW verwendet, dessen Lichtstrahl 1 auf einen Durchmesser von 15 mm durch eine nicht dargestellte Optik aufgeweitet und durch den Strahlteiler 3 in Referenz- und Objektstrahl aufgeteilt wurde. Der Objektstrahl durchsetzt die Streuscheibe 15 und als Objekt 6 eine Glasplatte mit einem Strichmuster aus parallelen Strichen unterschiedlischer Breiten und Strichabstände. Der Referenz- und der Objektstrahl wurden im Filmbereich unter einem Winkel von 20$^{\circ}$ zusammengeführt. Zur Hologrammaufzeichnung wurde der Film in einer bekannten Sofortbildkamera elektrostatisch aufgeladen und nach der holografischen Belichtung bis zur Ausbildung des aus Reliefstrukturen bestehenden Hologramms erwärmt.

Beim Durchstrahlen des Hologramms mit einer Taschenlampe, d.h. mit einer Weißlichtquelle bzw. polychromatischen Lichtquelle, ist in der Ebene aus ungebeugtem und gebeugtem Lichtstrahl visuell das Strichmuster als Muster paralleler Farbbänder zu erkennen.

Für die Rekonstruktion des Hologramms auf dem Aufzeichnungsmaterial 8 wird dabei die Anordnung gemäß Fig. 2 verwendet. Das im Aufzeichnungsmaterial 8 aufgezeichnete Hologramm wird mit einem Lichtstrahl 10 einer beliebigen Lichtquelle 9 durchstrahlt, wobei diese entweder eine monochromatische Lichtquelle, beispielsweise ein Laser oder eine beliebige Weißlichtquelle, d.h. eine polychromatische Lichtquelle, sein kann. Der am Hologramm gebeugte Lichtstrahl 11 liefert ein Bild der hologrammgespeicherten Objektwelle, die sich für den Beobachter zu einem direkt erkennbaren Bild 13' des Strichmusters zusammensetzt, das beispielsweise auf einer Mattscheibe 12 abgebildet wird. Die Striche 7,7',7",... werden als ein Farbbild entsprechend der spektralen Emission der für die Rekonstruktion verwendeten polychromatischen Lichtquelle 9 wiedergegeben, wobei die Streifen eine Farbabstufung in der Weise zeigen, daß die kurzwelligen Lichtanteile wie violettes Licht im schwächer gebeugten Strichbereich 13a und die langwelligen Lichtanteile wie rotes Licht im stärker gebeugten Strichbereich 13b auftreten. Dazwischen liegen Lichtanteile zwischen diesen beiden Spektralfarben. Mit schwächer und stärker gebeugtem Strichbereich ist gemeint, daß diese Bereiche entweder näher an dem Lichtstrahl 10 bzw. weiter von diesem entfernt liegen.

Es ist selbstverständlich, daß durch das Strichmuster-Hologramm hindurch weitere Hologramme in der Oberfläche des Aufzeichnungsmaterials 8 überlagernd aufgezeichnet werden können. Es können dabei ohne Einschränkung durch das aufgezeichnete Weißlichthologramm in Analogie zur sogenannten Trägerfrequenzaufzeichnung dem Hologramm direkt lesbare Informationen überlagert werden, die nicht auf Strichmuster beschränkt sind. Diese lesbaren Informationen, beispielsweise alphanumerische Zeichen,

0043509

können durch Projektion durch das Aufzeichnungsmaterial 8 hindurch oder mit Hilfe von Auflicht auf das Aufzeichnungsmaterial 8 sichtbar gemacht werden.

Als Aufzeichnungsmaterial 8 werden bevorzugt fotoleitende thermoplastische Aufzeichnungsschichten verwendet, jedoch sind auch fotografische Filme auf Silberhalogenid-Basis oder Fotolackschichten auf einer Trägerschicht hierfür ge-

HOECHST AKTIENGESELLSCHAFT
KALLE Niederlassung der Hoechst AG

- 11 -

eignet. Die fotoleitenden thermoplastischen Aufzeichnungsschichten werden insbesondere wegen der großen Bildhelligkeit bei gleichzeitig großer Lichtempfindlichkeit bevorzugt. Von Vorteil ist auch bei diesen Aufzeichnungsschichten, daß von dem ursprünglichen Strichmuster-Hologramm und den überlagerten Hologrammen eine Metallmatrize abgenommen werden kann, mit deren Hilfe Duplikat-Hologramme in einem thermoplastischen Kunststoff geprägt werden können.

Weißlichthologramme von einem eine Information enthaltenden Strichmuster als Vorlage nach dem erfindungsgemäßen Verfahren eignet sich in besonders einfacher Weise als Sicherungs- bzw. Kontrollmerkmal von Ausweis- und Identitätskarten. Eine erste Echtheitsprüfung derartiger Hologramme ist beispielsweise schon mit Hilfe einer Taschenlampe möglich, indem visuell die Existenz eines holografisch gespeicherten Strichmusters überprüft wird. Für eine weitergehende Informationsabfrage und Überprüfung muß die intensitätsmäßige Hell- und Dunkelverteilung des Strichmusters gemessen werden, ebenso die Strichbreite und der Strichabstand, indem eine Ausweiskarte mit einem derartigen Hologramm in einer Beleuchtungseinrichtung mittels einer Fotozelle bezüglich ihrer intensitätsmäßigen Hell- und Dunkelverteilung des Strichmusters untersucht wird und die Strichabstände und Strichstärken auf Übereinstimmung mit einem Referenzhologramm kontrolliert werden.

Für viele Registrierzwecke, beispielsweise bei Warenaus-

HOECHST AKTIENGESELLSCHAFT
KALLE  Niederlassung der Hoechst AG

- 12 -

gaben, werden gleichartige Informationen als Produktschlüssel benötigt, wofür sich insbesondere Duplikate
der Weißlichthologramme nach der Erfindung eignen.

---

### Patentansprüche

1. Verfahren zum Herstellen eines mit mono- oder polychromatischem Licht rekonstruierbaren Hologramms eines Objekts, bei dem ein Aufzeichnungsmaterial für das Hologramm mit zwei kohärenten, interferierenden Lichtstrahlen einer Lichtquelle belichtet wird, von denen der Objektstrahl durch das Objekt moduliert wird und von der gleichen Seite wie der Referenzstrahl auf das Aufzeichnungsmaterial auftrifft, dadurch gekennzeichnet, daß ein Strichmuster aus parallelen Strichen (7, 7', 7", ...) als Objekt (6) vorgesehen wird und daß die Striche parallel zu einer Ebene verlaufen, die von dem Objektstrahl (4) und einem Referenzstrahl (5) der Lichtquelle (2) aufgespannt wird.

2. Verfahren nach Anspruch 1, dadurch gekennzeichnet, daß die Striche (7, 7', 7", ...) des Strichmusters in Strichbreite und im Strichabstand voneinander variieren.

3. Verfahren nach den Ansprüchen 1 und 2, dadurch gekennzeichnet, daß die Striche (7, 7', 7", ...) als ein Farbbild, entsprechend der spektralen Emission einer für die Rekonstruktion verwendeten polychromatischen Lichtquelle (9) wiedergegeben werden, mit kurzwelligen Lichtanteilen  wie violettem Licht im schwächer gebeugten Strichbereich (13a) und mit langwelligen Lichtanteilen wie rotem Licht im stärker gebeugten Strichbereich (13b).

4. Verfahren nach den Ansprüchen 1 bis 3, dadurch ge-

HOECHST AKTIENGESELLSCHAFT
KALLE Niederlassung der Hoechst AG

- 14 -

kennzeichnet, daß durch das Strichmuster-Hologramm hindurch weitere Hologramme in der Oberfläche des Aufzeichnungsmaterials überlagernd aufgezeichnet werden.

5. Verfahren nach den Ansprüchen 1 bis 4, dadurch gekennzeichnet, daß dem bzw. den Hologrammen direkt lesbare Informationen überlagert werden, die durch Projektion durch das Aufzeichnungsmaterial hindurch oder mit Hilfe von Auflicht auf das Aufzeichnungsmaterial sichtbar gemacht werden.

6. Verfahren nach den Ansprüchen 1 bis 5, dadurch gekennzeichnet, daß von dem bzw. den Hologrammen informationsgleiche Hologramme durch Prägen eines thermoplastischen Kunststoffes mit einer von dem oder den ursprünglichen Hologrammen abgenommenen Metallmatrize erhalten werden.

7. Verwendung von nach einem oder mehreren der Ansprüche 1 bis 6 hergestellten Hologrammen in Identitätsträgern als Sicherungsmerkmal.

---

Fig. 1

Hoe 80/K 039 - HOECHST AKTIENGESELLSCHAFT

0043509

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| AD | DE - A - 2 840 556 (G. DAUSMANN)<br>* Seiten 4,5; Figuren 1,2 * | 1,7 |
| A | IBM TECHNICAL DISCLOSURE BULLETIN, Band 10, Nr. 8, Januar 1968, Seite 1187<br>New York, U.S.A.<br>M.A. HABEGGER et al.: "Hologram light deflector"<br>* Insgesamt * | 3 |
| A | US - A - 3 567 305 (R. COLLIER et al.)<br>* Spalten 6,7; Figuren 7,9 * | 1,4 |
| A | AT - A - 334 117 (G.A.O.)<br>* Seiten 3,4; Figuren 1,3 * | 1,6,7 |
| A | US - A - 3 993 398 (M. NOGUCHI et al.)<br>* Spalten 2,3; Figuren 1-3 * | 1 |

**KLASSIFIKATION DER ANMELDUNG (Int. Cl.3)**

G 03 H   1/00
G 06 K  19/08

**RECHERCHIERTE SACHGEBIETE (Int. Cl.3)**

G 03 H   1/00
         1/04
         1/24
         1/26
G 06 K  19/08
G 02 B   5/32

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-10-1981 | BOEHM |

EPA form 1503.1   06.78